# EUROPEAN PATENT APPLICATION

(11) **EP 1 863 287 A2**
(43) Date of publication of application: **05.12.2007**
(21) Application number: 07108790.2
(22) Date of filing: 23.05.2007
(51) Int. Cl.: H04N 7/173, H04N 5/00, H04N 5/445

(54) **Broadcast receiver and method for providing diagnostic information**

(30) Priority: 01.06.2006 KR 20060049575
(71) Applicant: LG Electronics Inc., Seoul, 150-721 (KR)
(72) Inventor: Cha, Sang Hoon, SEOUL 120-830 (KR)
(74) Representative: Cabinet Plasseraud

(57) **Abstract**

A host includes a controller configured to receive a request self-diagnostic to the host, wherein the request is for diagnostic information associated with central processing unit (CPU) for an application. The controller is further configured to collect the requested diagnostic information.

## Description

This application claims the benefit of the Korean Patent Application No. 10-2006-0049575, filed on June 1, 2006, which is hereby incorporated by reference as if fully set forth herein.

### BACKGROUND

### Field of the Disclosure

The present disclosure relates to content broadcasting technology, and more particularly, to a broadcast receiver, data structure and method for providing diagnostic information.

### Background

Generally, a content broadcast system may include a broadcasting station transmitting contents through a wired (e.g., telephone or cable) or wireless (e.g., cellular or satellite) network and at least one host, such as a broadcast receiver, that receives the contents. The broadcast receiver may include a communication interface. Where the broadcast receiver does not have a communication interface, a communication card may be used by the broadcast receiver in order to interface with the broadcasting station.

In the case of cable broadcasting, a cable broadcasting station may be a system operator (SO) headend or a multiple system operator (MSO) headend. The SO may be a unified wire broadcast provider (i.e., local cable TV broadcast provider) and the MSO may be several SOs grouped together.

A cable broadcast receiver may be a digital built-in TV, a digital ready TV, etc. The cable broadcast receiver may employ an open cable system and may use a cablecard or a point of deployment (POD) module that may include a conditional access (CA) system. Alternatively, the cable broadcast receiver may have a built-in module that is a functional equivalent of the cablecard. In this instance, the cable broadcast receiver may receive a CA system, in a form of a software, that is downloadable from the SO or MSO and stored in a memory of the cable broadcast receiver. The downloadable software is usually referred to as download conditional access system (DCAS). As such, the cable broadcast receiver may have a configuration that may or may not require a separate cablecard.

Where a cablecard is required, the cablecard may use a personal computer memory card international association (PCMCIA) standard in order to interface with the cable broadcast receiver. The cablecard may be inserted in a slot provided at the cable broadcast receiver.

Meanwhile, a host may receive and process an Open Cable Application Platform (OCAP) service provided by a headend.

That is, the host must download an OCAP-Java (OCAP-J) application, such as an Electronic Program Guide (EPG) and a monitor application transmitted from a headend located at a remote place via a cable network, and drive the application on its system.

At this time, the host includes a central processing unit (CPU) having capability suitable for driving the OCAP-J application as determined at the time of producing a product or a CPU having capability determined by the agreement between the headend and a manufacturer, in order to download and drive the OCAP-J application on its system.

However, since there is no a limitation in an OCAP service provided by the headend, only the monitor application, the EPG containing only basic functions, and an impulse pay-per-view (IPPV) service was provided when the service starts to be provided, but, in the future, a variety of services will be provided after an OCAP service environment is stabilized.

Accordingly, as a service provided by the headend gradually becomes complicated and various, the capability of the CPU necessary for receiving and processing the service will be gradually improved.

However, a CPU included in a host which is developed and sold at a specific time point has capability required at that time. Therefore, when the service provided by the headend becomes complicated and various, the CPU included in the host is unlikely to normally operate the received service.

Such a problem cannot be solved by replacing a set-top box leased from the headend with a new set-top box.

### SUMMARY

Accordingly, the present disclosure is directed to a broadcast receiver and a method for providing diagnostic information that substantially obviate one or more problems described above.

For example, the disclosure may disclose broadcast receiver and method for providing diagnostic information, by which central processing unit (CPU) status information of a host may be displayed on-screen display (OSD) window.

Advantages, objects, and features of the disclosure in part may become apparent in the description which follows and in part may become apparent to those having ordinary skill in the art upon examination of the following or may be learned from practice of the disclosure. The objectives and other advantages of the various embodiments of the disclosure may be realized and attained by the structures and processes described in the written description, in the claims, and in the appended drawings.

To achieve these objects and other advantages and in accordance with the purpose of the disclosure, as embodied and broadly described herein, a host includes a host controller configured to receive a request self-diagnostic to the host, wherein the request is for diagnostic information associated with central processing unit (CPU) for an application. The host controller further configured to collect the requested diagnostic information.

In another aspect, a method includes receiving a request self-diagnostic to the host, wherein the request is for diagnostic information associated with central processing unit (CPU) for an application; collecting the requested diagnostic information in accordance with the request; and displaying the collected diagnostic information via on-screen display (OSD).

It is to be understood that both the foregoing general description and the following detailed description are exemplary and explanatory and should not be construed as limiting the scope of the claims.

### BRIEF DESCRIPTION OF THE DRAWINGS

The accompanying drawings, which are included to provide a further understanding of the disclosure are incorporated in and constitute a part of this application. The drawings together with the description serve to explain the principle of the disclosure. In the drawings:

FIG. 1 is an exemplary diagram of a cable broadcast network;

FIGs. 2A and 2B are diagrams of examples of CPU_information_report () object syntax;

FIG. 3 is a block diagram of an exemplary cable broadcast receiver; and

FIG. 4 is an exemplary flowchart of a method of processing CPU status diagnostic information.

### DETAILED DESCRIPTION

Reference will now be made in detail to broadcast receivers, data structures and methods for providing diagnostic information according to the various embodiments, examples of which are illustrated in the accompanying drawings. Wherever possible, the same reference numbers will be used throughout the drawings to refer to the same or like parts for simplicity. In this case, Open Cable Application Platform (OCAP) is taken as an example of a data broadcasting platform in describing the various disclosed embodiments.

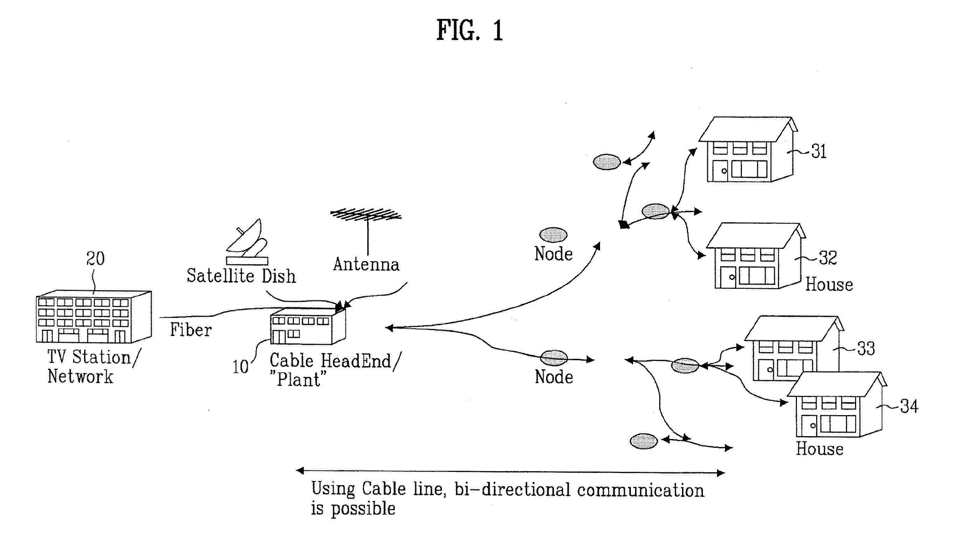

FIG. 1 is an exemplary diagram of a cable broadcast network. Referring to FIG. 1, a cable headend or plant may receive cable broadcast signals via various communication networks from, for example, a television broadcasting station. The cable headend may deliver cable broadcast to a cable broadcast receiver, which may include a cablecard, via a network including nodes.

The cable broadcast receiver may communicate bi-directionally with the cable headend. In this case, the transmission/reception of data is achieved via a cable network capable of transferring data bi-directionally.

The cable broadcast receiver may be connected to various devices, such as a digital video disc (DVD) player, a digicam, a set-top box and the like. As services provided by the cable headend increase, the broadcast receiver may experience shortage of memory required for implementing the services.

The present disclosure is to efficiently use a CPU included in a host of a receiver. When a user makes a request for the self-diagnosis of the status of the CPU using a remote controller, the host may provide information about the status of the CPU to the user.

Accordingly, the user may check the information about the status of the CPU included in the host and select an adequate downloadable application or data.

At this time, a method of allowing the host to receive a diagnostic request for the status of the CPU included in the host for the application and to collect, store and provide diagnostic information to the user is realized based on a predetermined protocol. The following description will be made using a host device diagnostic protocol used in an open cable as the predetermined protocol.

The host device diagnostic protocol operates regardless of the existence of a cablecard included in the broadcast receiver and starts to operate by a remote controller when a user or an after-sale service (A/S) engineer wants to view the diagnostic information.

That is, when the user makes a request for the diagnosis of the status of the CPU included in the host using the remote controller, the diagnostic request is transmitted to the host by the host device diagnostic protocol. When the host receives the diagnostic request, the host collects the diagnostic information and displays the collected diagnostic information via an on-screen display (OSD) window.

Accordingly, the user or the A/S engineer may check the status of the CPU included in the host for the application using the information and select an adequate downloadable application or data or provide after-sale service according to the status of the CPU.

The host device diagnostic protocol is a preferred example of the present disclosure and the technical spirit of the present disclosure is not limited to this.

As described above, when the diagnostic request for the status of the CPU included in the host is transmitted between the user and the host, the host device diagnostic protocol should contain a diagnostic identification indicating the diagnostic information about the status of the CPU.

Hereinafter, the host device diagnostic information containing the diagnostic identification indicating the diagnostic information about the status of the CPU is shown in Table 1.

**Table 1**

| **DIAGNOSTIC IDENTIFICATION** |
|---|
| OCHD2 power status |
| OCHD2 boot status |
| OCHD2 memory allocation |
| Software version numbers of code in the OCHD 2 |
| Firmware version |
| MAC addresses |
| OCHD2 network addresses |
| Status of FDC |
| Status of FAT |
| Status of RDC |
| Current channel status |
| IEEE-1394 port status |
| DVI/HDVI port status |
| Status of DOCSIS transport channels |
| **CPU information** |

At this time, the diagnostic information defined by the diagnostic identification may be displayed on the OSD or reported to the cablecard.

For example, "OCHD2 power status" shall include, but are not limited to Host's power status, "OCHD2 boot status" shall include, but are not limited to Host's booting status, and "OCHD2 memory allocation" shall include, but are not limited to type of memory being reported (as applicable: ROM, DRAM, SRAM, Flash, HDD, DVD, and NVM) and physical size of memory type (in kilobytes, defined to 1024 bytes). "Software version numbers of code in the OCHD 2" shall include, but are not limited to Application's name string, Application's version number, Software status (active, inactive or downloading), and if applicable Application's signature.

"Firmware version" shall include, but are not limited to Firmware version number of entire firmware image and Firmware's release or installation date of entire firmware image. "MAC addresses" shall include, but are not limited to Type of devices being reported (as applicable: Host, CableCARD Device, IEEE-1394, universal serial bus (USB), embeded Cable Modem (eCM)) and MAC address of each reported device. "OCHD2 network addresses" shall include, but are not limited to Network address of device. "Status of FDC" shall include, but are not limited to forward data channel (FDC) center frequency, in MHz and Carrier lock status (e.g., LOCKED - NOT LOCKED).

"Status of FAT" shall include, but are not limited to modulation mode indicator; analog, 64 QAM or 256 QAM, or other. If the currently tuned channel is a digital QAM channel, then carrier lock status, PCR lock status; the FAT channel tuner is locked or not locked to the currently tuned service and a numerical estimate of the channel's signal to noise ratio in tenths of a dB, and numerical estimate of the signal level in tenths of a dBmV (peak level for analog, average level for others).

"Status of RDC" shall include, but are not limited to RDC center frequency, in MHz, RDC transmitter power level, in dBmV, and RDC data rate (256kbps, 1544kbps or 3088kbps).

"Current channel status" shall include, but are not limited to Channel type; analog or digital, authorization status; OCHD2 is authorized or not authorized for currently tuned service, purchasable status; currently tuned service MAY or MAY NOT be purchased, purchased status; currently tuned service is or is not purchased, preview status; currently tuned service is or is not in preview mode, if the OCHD2 is utilizing parental control, then parental control status; and currently tuned service is blocked or is not blocked via parental control.

"IEEE-1394 port status" shall include, but are not limited to Loop status (loop/no loop exists), root status (OCHD2 is/is not Root node), cycle master status (OCHD2 is/is not Cycle Master), A/D Source Selection status (Monitor does / does not support A/D source selection function, port connection status(Port 1 - connected/not connected and Port 2 - connected/not connected), total number of nodes (devices) connected to IEEE-1394 bus, with the following information for each node: device subunit type, A/D Source Selection Status, and EUI 64.

"DVI/HDVI port status" shall include, but are not limited to connection status (no connection exists, device connected - not repeater, device connected- repeater), connected device type, connected device color space, HDCP status (not enabled, enabled), Host Device HDCP status (non HDCP device, compliant HDCP device, and revoked HDCP device), video format (the number of horizontal lines associated with the video format on the DVI / HDMI link, the number of vertical lines associated with the video format on the DVI / HDMI link, the scan rate associated with the video format on the DVI / HDMI link, the aspect ratio associated with the video format on the DVI / HDMI link (4:3, 16:9), and progressive or interlaced video), and audio format (audio format type, audio sample size, and audio sample frequency).

"Status of DOCSIS transport channels" shall include, but are not limited to downstream center frequency, in MHz, downstream received power level, in dBmV, downstream carrier lock status (e.g., LOCKED / NOT LOCKED), upstream transmitter center frequency, in MHz, upstream transmitter power level, in dBmV, upstream symbol rate, in Msps, and upstream modulation type.

"CPU information" shall include, but are not limited to diagnostic information about the status of the CPU included in the host. At this time, the status of the CPU contains, for example, the capability of the CPU included in the host for an OCAP application.

Hereinafter, a scenario using the "CPU information" defined as one of the diagnostic information defined in the host diagnostic protocol will be described.

That is, when a user makes a request for status information of the CPU of the host using a remote controller, the host collects the status information of the CPU according to the request. The host displays the collected status information of the CPU via an OSD window in response to the request of the user. At this time, as described above, since the "CPU information" is previously defined as one of the diagnostic information of the host device diagnostic protocol, the host can determine what the request of the user is and collect the information corresponding thereto, using the diagnostic ID indicating the "CPU information".

Hereinafter, the information collected when the user makes a request for the status information of the CPU will be described. At this time, as described above, information about the capability of the CPU included in the host for the application will be described as an example of the status information of the CPU.

The information about the capability of the CPU includes, for example, at least one of information about a program execution time, information about a clock speed of the CPU, information about the sizes of a D-cache and an I-cache, and information about million instructions per second (MIPS).

The CPU_information_report() object syntax configured when the user makes a request for the status information of the CPU will now be described. At this time, the fields of CPU_information_report () object syntax may include the above-described information.

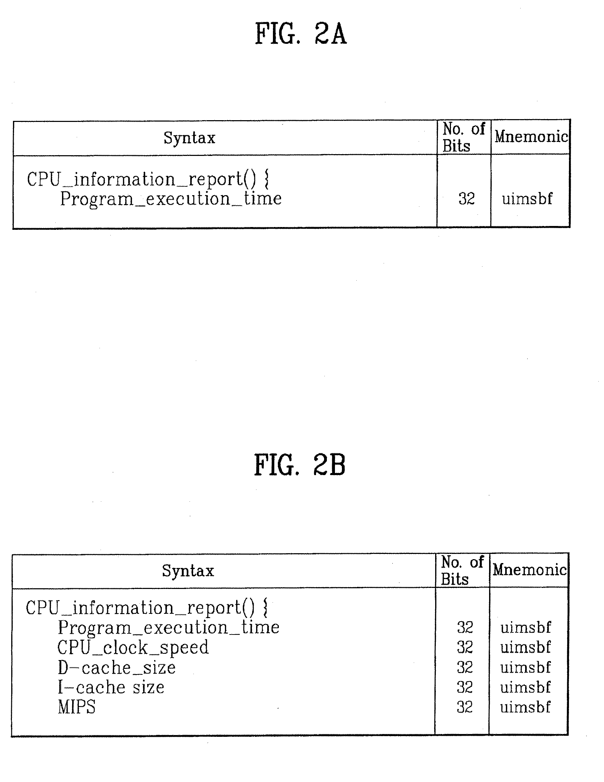

FIGs. 2A and 2B are diagrams of examples of CPU_information_report() object syntax. At this time, in the CPU_information_report() object syntax, the status information of the CPU, for example, the information about the capability of the CPU included in the host for the application, may be defined by a variety of methods. Hereinafter, for example, one of variety of methods will be described.

First, FIG. 2A will be described.

A "program_execution_ time" field is a 32-bit field that indicates a program execution time.

At this time, the host obtains the program execution time, for example, by downloading a downloadable benchmarking application from the headend via a cable network. Alternatively, a host vendor may receive a benchmarking sample code for measuring the capability of the CPU of the host from the headend and uses the benchmarking sample code in manufacturing the host and the host may obtain the program execution time using the benchmarking sample code included at the time of the manufacture thereof. Hereinafter, for convenience of description, the downloadable benchmarking application or the benchmarking sample code is called a benchmarking program.

Accordingly, the host executes the benchmarking program to obtain the benchmarked result according to the request of the user. From the benchmarked result, the capability of the CPU included in the host may be estimated. At this time, the benchmarked result indicates the program execution time according to the execution of the benchmarking program and the unit thereof is millisecond (ms).

Next, FIG. 2B will be described. In FIG. 2B, in order to provide the status information of the CPU in more detail, other fields are contained in addition to the "program_execution_ time" field shown in FIG. 2A. At this time, the other fields include, for example, at least one of a "CPU_clock_speed" field, a "D_cache_size" field, an "I_cache_size" field, and an "MIPS" field in association with the capability of the CPU.

The "CPU_clock_speed" field is a 32-bit field that indicates the clock speed of the CPU included in the host. At this time, the unit of the clock speed of the CPU of the host may be, for example, MHz. The "D_cache_size" field is a 32-bit field that indicates the size of a data cache of the CPU included in the host. The "I cache size" indicates the size of an instruction cache of the CPU included in the host. At this time, the unit of the size of the data cache or the instruction cache of the CPU of the host may be, for example, Kilobyte. The "MIPS" field indicates Million Instruction Per Second (MIPS) information of the CPU included in the host. At this time, the unit of the MIPS of the CPU of the host may be, for example, MIPS.

As described above, when the user makes a request for the diagnosis of the status of the CPU using the remote controller, the host collects and displays the diagnostic information shown in FIG. 2A or 2B via the OSD window.

However, in the collection of the diagnostic information according to the request of the user, the diagnostic information may be set to zero when the diagnostic information cannot be collected. In this case, the host displays "Not Available (N/A)" on the screen in response to the request of the user to indicate that the diagnostic information cannot be collected according to the request.

The host may provide the collected diagnostic information about the status (capability) of the CPU to the headend via a cable network when a communication device is mounted. The headend may record the diagnostic information about the status (capability) of the CPU of each host in an application database of its application server. Accordingly, the headend may determine a downloadable application which can be driven by the host by managing and using the diagnostic information about the status (capability) of the CPU of each host, which is recorded in the application database.

For example, when the application database for recording the diagnostic information about the status (capability) of the CPU received from each host is managed from each host, the headend may define a host which is determined to have the capability sufficient to drive all downloadable (OCAP-J) applications provided by the headend as a 'full OCAP-J Application code image', and define a host which is determined to have the capability insufficient to drive all downloadable (OCAP-J) applications provided by the headend as a 'light-weight OCAP-J Application code image', using the diagnostic information about the status (capability) of the CPU received from each host. As a method of forming the 'light-weight OCAP-J Application code image', for example, a method of allowing an even host having low capability to normally drive the code image at the sacrifice of the quality of a graphical image for determining the look and feel of the application may be used. Alternatively, a method for deleting a service which requires high CPU capability or a user interface (UI) composed of a graphical image or changing a service which operates for the service or the structure of the UI to reduce the use of the CPU may be used.

That is, when the headend receives the diagnostic information about the status (capability) of the CPU included in each host connected via the cable network and records the information in the application database of the application server, each host is defined as any one of the 'full OCAP-J Application code image' and the 'light-weight OCAP-J Application code image'.

The headend may select a code image suitable for each host and selectively download a downloadable application suitable for each host connected via the cable network, using the information recorded in the application database.

Defining each host as the 'full OCAP-J Application code image' or the 'light-weight OCAP-J Application code image' by the host does not mean that the application is divided into two stages. That is, the division number of the application database may be proportional to how many times the capability of the CPU of eac host are explicitly changed in the protocol related to the policy of the headend or how many times the headend and the manufacturer agree with each other with respect to the capability of the CPU.

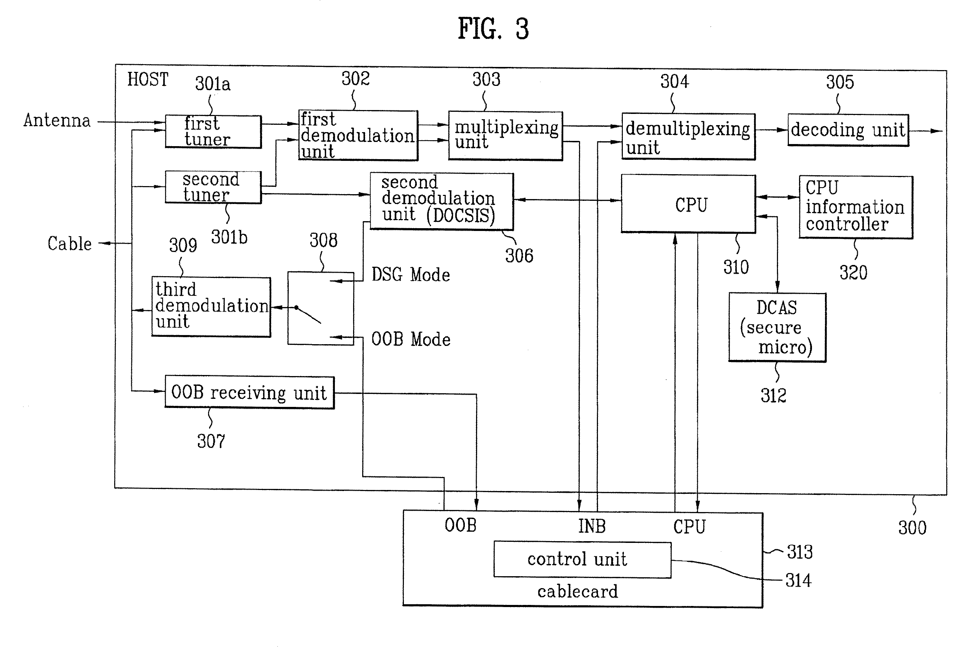

Next, when the user makes a request for the diagnosis of the status (capability) of the CPU included in the host using the remote controller, the digital broadcast receiver for receiving and processing diagnostic information according to the request will be described. FIG. 3 is a block diagram of an exemplary digital broadcast receiver.

The digital broadcast receiver may include a host and a communication device which can be attached to or detached from the host. At this time, the communication device may include a cablecard. Alternatively, the host may include a downloadable conditional access system (DCAS) having a function similar to the cablecard.

FIG. 3 shows a case where the digital broadcast receiver can receive and process at least one of a cable broadcasting signal, a terrestrial broadcasting signal and a satellite broadcasting signal.

Meanwhile, a bi-directional communication method between a digital broadcast receiver and a broadcasting station includes two modes. As a mode for an uplink service in an open cable, there are an out-of-band (OOB) mode and a DOCSIS Set-top Gateway (DSG) mode. Accordingly, a viewer can selectively view a desired program through the host using any one of the two modes. Alternatively, a viewer can directly participate in a broadcasting program or selectively view necessary information. A data broadcasting service may be provided through the two modes.

The OOB mode is the standard of transport specifications between a headend (cable broadcasting station) and an inter-sec instrument within a set-top box. The DSG mode indicates a transport mode between a cable modem control system of a cable broadcasting station and a data-over-cable service interface specifications (DOCSIS)-based cable modem within a set-top box. At this time, the DOCSIS can transmit data using the cable modem.

The digital broadcast receiver according to the present disclosure is a cable broadcast receiver using a combination of the OOB mode and the DSC mode.

The digital broadcast receiver is a cable broadcast receiver using a combination of the OOB and DSG modes. The host 300 includes a first tuner 301a, a second tuner 301b, a first demodulator 302, a multiplexer 303, a demultiplexer 304, a decoder 305, a second demodulator (DOCSIS) 306, an OOB receiver 307, a switching unit 308, a third demodulator 309, a CPU 310, and a CPU information controller 311.

The first tuner 301a tunes only a specific channel frequency of a cable audio/video (A/V) broadcasting signal transmitted in-band through a cable or a terrestrial A/V broadcasting signal transmitted through an antenna, and outputs the tuned signal to the first modulator 302.

At this time, the terrestrial broadcasting signal may be modulated by a Vestigial Sideband Modulation (VSB) method and the cable broadcasting signal may be modulated by a quadrature amplitude modulation (QAM) method. The first demodulator 302 may demodulate the terrestrial broadcasting signal and the cable broadcasting signal according to the respective modulation methods although the methods for transmitting the signals are different from each other. Accordingly, the first demodulator 302 may demodulate the signal selected by the first tuner 301a by the VSB method or the QAM method. The signal demodulated by the first demodulator 302 is multiplexed by the multiplexer 303 such that the cable broadcasting signal is output to the cablecard 313 and the terrestrial broadcasting signal is output to the demultiplexer 304.

The embodiment shown in FIG. 3 shows a case where the cablecard 313 can process multi-stream. Accordingly, the cablecard 313 allows a user to view broadcasting information input by multiplexing at least two streams through the host 300.

The demultiplexer 304 receives the multiplexed broadcasting signal, demultiplexes the received broadcasting signal into a plurality of streams, and outputs the plurality of streams. The decoder 305 receives and decodes the broadcasting signal demultiplexed by the demultiplexer 304. The decoder 305 decodes the demultiplexed broadcasting signal and outputs an A/V signal which can be viewed by the user.

The second tuner 301b tunes a specific channel frequency of the data broadcasting signal transmitted through the cable in the DSC mode and outputs the tuned signal to the second demodulator 306. The second demodulator 306 demodulates the data broadcasting signal of the DSC mode and outputs the demodulated broadcasting signal to the CPU 310.

The third tuner 307 tunes a specific channel frequency of a downlink data broadcasting signal transmitted through the cable in the OOB mode and outputs the tuned signal to the cablecard 313.

If bi-directional communication between the headend and the host is possible, uplink information (e.g. pay program application, diagnostic information of the host, or the like) transmitted from the host to the headend may be transmitted in the OOB mode or the DSG mode. Accordingly, the host may include the switching unit 308 so as to select any one of the modes and transmit information.

In the OOB mode, user information or system diagnosis information is output to the third modulator 309 through the cablecard 313 and the switching unit 308 and the third modulator 309 modulates the output signal using a quadrature phase shift keying (QPSK) modulation method and transmits the modulated signal to the headend through the cable. If the broadcasting signal of the user is transmitted in the DSG mode, the information is output to the modulator 309 through the CPU 310 and the switching unit 308 and is then modulated by the modulator 309 using a QAM-16 modulation method to be transmitted to the headend through the cable.

Then, the CPU information controller 311 receives a diagnostic request for the status (capability) of the CPU, collects diagnostic information as defined in FIG. 2A or 2B as the diagnostic information about the status (capability) of the CPU, and transmits the diagnostic information to the CPU 310.

The CPU 310 displays the diagnostic information received from the CPU information controller 311 via the OSD window.

That is, the CPU 310 of the host receives the diagnostic request for the status (capability) of the CPU included in each host, and instructs the CPU information controller 311 to collect the diagnostic information according to the diagnostic request. The CPU information controller 311 collects the diagnostic information under the control of the CPU 310. The CPU information controller 311 may transmit the diagnostic information to the CPU 310 when the collection of the diagnostic information is completed. Accordingly, the CPU 310 displays the diagnostic information on the screen via the OSD window when receiving the diagnostic information collected by the CPU information controller 311.

The cablecard 313 may receive a multi-stream broadcasting signal from the multiplexer 303 when receiving the terrestrial broadcasting signal. At this time, when the received broadcasting signal is scrambled, the cablecard 313 descrambles the scrambled broadcasting signal such that the cable broadcasting signal is normally viewed.

The downloadable conditional access system (DCAS) 312 is a microprocessor having a function similar to the cablecard 313, which operates as a descramble unit on the host regardless of the existence of the cablecard 313.

The digital broadcast receiver is applicable to all kinds of hosts having a diagnostic function and a downloadable application function, such as ACAP and MHP, as well as the OCAP.

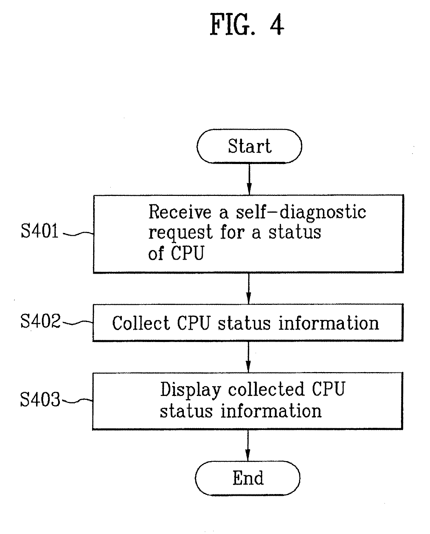

Hereinafter, a method of processing diagnostic information in the digital broadcast receiver. FIG. 4 is an exemplary flowchart of a method of processing diagnostic information.

The host receives a self-diagnostic request for the status of the CPU included in the host from a user by the key input of a remote controller (S401) and collects diagnostic information about the status of the CPU according to the received diagnostic request (S402). At this time, the collected diagnostic information about the status of the CPU is, for example, shown in FIG. 2A or 2B. The status of the CPU includes, for example, at least one of information about program execution time, information about the clock speed of the CPU, information about the size of a D-cache, information about the size of an I-cache, and information about MIPS.

The collected diagnostic information is stored and the stored diagnostic information is displayed via the OSD window (S403).

By the above-described process, the host may output the diagnostic information about the status of the CPU included in the host for an application or data via the OSD window. In FIG. 4, the method of allowing the host to receive the self-diagnostic request from the user and to output the collected diagnostic information via the OSD window according to the received request is realized by a predetermined protocol (e.g. a host device diagnostic protocol). Accordingly, the above-described process is realized regardless of the existence of the cablecard.

However, if the host transmits the collected diagnostic information about the status of the CPU to the headend through the cablecard, the headend determines the code image of each host and records the code image in an application database on the basis of the diagnostic information about the status of the CPU of each host such that an adequate OCAP-J application can be selectively downloaded to the host.

The present disclosure has been described using digital broadcast receivers in which the broadcast receivers may have terrestrial analog/digital channels, and cable analog/digital channels. With modifications known to those skilled in the art, the present disclosure can be implemented in any terrestrial wired (e.g., telephone) and wireless (e.g., cellular) networks and satellite networks.

It will be appreciated that, in various of the above-disclosed and other features and functions, or alternatives thereof, they may be implemented on a programmed microprocessor, a microcontroller, an integrated circuit element such as Application Specific Integrated Circuit (ASIC), Programmable Logic Devices (PLD), Programmable Logic Array (PLA), Field-Programmable Gate Array (FPGA), or Phase Alternation by Line system (PAL), or the like, a hardwired electronic or logic circuit, or a programmable logic device.

It will be appreciated that the described flow processes, data structures, protocols, or tables can be implemented as a self-consistent sequence of computerized steps that lead to a desired result. These steps can be defined by and/or in one or more computer instructions stored in a computer-readable medium, or can be encompassed using a signal, or provided as software instructions to a processing device. These steps can be performed by a processor executing the instructions that define the steps. Further, the flow process can be performed by a processor executing one or more appropriate programs, by special purpose hardware designed to perform the method, or any combination of such hardware, firmware and software elements.

It will be appreciated that various of the above-disclosed and other features and functions, or alternatives thereof, may be desirably combined into many other different devices or applications. Also, various presently unforeseen or unanticipated alternatives, modifications, variations or improvements therein may be subsequently made by those skilled in the art, and are also intended to be encompassed by the following claims.

## Claims

1. A host comprising:
a host controller configured to receive a request self-diagnostic to the host, wherein the request is for diagnostic information associated with central processing unit (CPU) for an application; and
the host controller further configured to collect the requested diagnostic information.

2. The host of claim 1, wherein the host controller further configured to display the collected diagnostic information via on-screen display (OSD) window.

3. The host of claim 2, wherein the host is configured to perform the request self-diagnostic and display via the OSD window the result using Host Device Diagnostic Protocol.

4. The host of claim 1, wherein the requested diagnostic information includes information that identifies capability of CPU for application.

5. The host of claim 4, wherein the information includes information that identifies program execution time of benchmarking program.

6. The host of claim 4, wherein the information includes information that identifies clock speed of CPU.

7. The host of claim 4, wherein the information includes information that identifies data (D)-cache of CPU.

8. The host of claim 4, wherein the information includes information that identifies instruction (I)-cache of CPU.

9. The host of claim 4, wherein the information includes information that identifies million instructions per second (MIPS) of CPU.

10. The host of claim 4, wherein the information include a first information identifying a program execution time of benchmarking program, a second information identifying clock speed of CPU, a third information identifying D-cache of CPU, a fourth information identifying instruction (I)-cache of CPU, and a fifth information identifying million instructions per second (MIPS) of CPU.

11. The host of claim 5, wherein the information includes a first information identifying clock speed of CPU, a second information identifying D-cache of CPU, a third information identifying instruction (I)-cache of CPU, and a fourth information identifying million instructions per second (MIPS) of CPU.

12. The host of claim 1, wherein the application includes an Open Cable Application Platform (OCAP) application.

13. A method of comprising the steps of:
receiving a request self-diagnostic to the host, wherein the request is for diagnostic information associated with central processing unit (CPU) for an application;
collecting the requested diagnostic information in accordance with the request; and
displaying the collected diagnostic information via on-screen display (OSD).

14. The method of claim 13 further comprising the step of storing the collected diagnostic information.

15. The method of claim 13 further comprising the step of parsing the request for a value.

16. The method of claim 15 further comprising the step of determining, based on the value, whether the request is for the diagnostic information associated with the CPU for an application.

17. The method of claim 13 further comprising the step of selecting a version of the application at the host appropriate to the CPU for the application.
